# EUROPEAN PATENT SPECIFICATION

(11) **EP 2 914 026 B1**
(45) Date of publication and mention of the grant of the patent: **14.12.2016**
(21) Application number: 14157075.4
(22) Date of filing: 27.02.2014
(51) Int. Cl.: H04W 8/00, H04W 76/02

(54) **METHOD AND APPARATUS FOR TRANSMITTING A DISCOVERY SIGNAL BY A COMMUNICATION DEVICE**
VERFAHREN UND VORRICHTUNG ZUR ÜBERTRAGUNG EINES ENTDECKUNGSSIGNALS DURCH EINE KOMMUNIKATIONSVORRICHTUNG
PROCÉDÉ ET APPAREIL POUR TRANSMETTRE UN SIGNAL DE DÉCOUVERTE PAR UN DISPOSITIF DE COMMUNICATION

(43) Date of publication of application: 02.09.2015
(73) Proprietor: NTT DoCoMo, Inc., Tokyo (JP)
(72) Inventor: Hu, Liang, 80687 München (DE); Kusume, Katsutoshi, München, 80687 (JP); Iwamura, Mikio, München, 80687 (JP)
(74) Representative: Betten & Resch

(56) References cited:
- EP-A1- 1 453 258
- WO-A2-2008/033985
- GB-A- 2 375 014
- US-A1- 2010 110 929
- US-B1- 7 885 639
- US-B1- 8 498 241
- QUALCOMM INCORPORATED: "Resource Allocation for D2D Discovery", 3GPP DRAFT; R1-140472_QC_RESOURCE_ALLOCATION_FOR_D2D_D ISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050736005, Retrieved from the Internet: URL:http://www.3gpp.org/ftp/Meetings_3GPP_ SYNC/RAN/RAN1/Docs/ [retrieved on 2014-02-09]

## Description

### FIELD OF THE INVENTION

The present technology relates to a method and apparatus for transmitting a discovery signal by a communication device and more specifically to the resource allocation problem of device-to-device (D2D) discovery signals and a scheme for resource hopping.

### BACKGROUND OF THE INVENTION

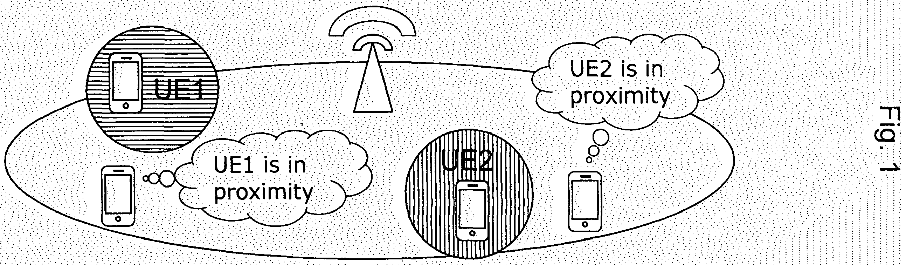

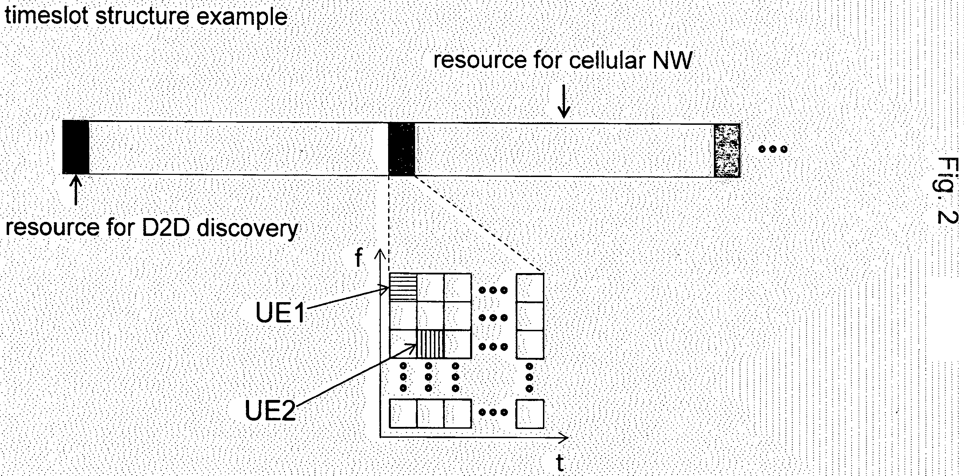

Figure 1 shows a scenario of device-to-device discovery, where devices are capable to discover other devices of interest in the proximity within or without cellular network coverage. Such device proximity discovery enables many diverse applications such as proximity advertising, mobile social networking, car-to-car communication, and public safety communication. One particular aspect of device-to-device (D2D) discovery is the resource allocation problem, which is illustrated in Figure 2. The D2D discovery resource pool is semi-static reserved from the uplink spectrum band of cellular network e.g., in a periodical manner. For each of D2D discovery resource pool, it consists of both time and frequency domain resource blocks each of which is called a discovery resource block (DRB). It is assumed herewith that the device needs exactly one DRB to transmit the discovery signal. The techniques presented in this application may however extend to scenarios, where a transmission of the discovery signal requires more than one resource block. At each resource pool, each device selects one DRB to broadcast its own discovery signal to its neighboring devices, whereas it also monitors and decodes discovery signals from other devices in each of the DRBs within the resource pool.

The technology described herewith focusses specifically on techniques concerning how each device selects a DRB for transmission of the discovery signal. There are two types of DRB selection schemes: network-based and device-based. In network-based schemes, the network / evolved node B (eNB) decides which device selects which DRB on behalf of the device, where the network coordination plays a significant role. A drawback of this scheme is that it may lead to very high network signaling load as the network needs to unicast the DRB selection for each device. Also, the scheme may not work for idle devices which are not connected to the eNB.

In one embodiment, the present technology focuses on a device-based scheme, which is scalable in terms of network signaling and which is also flexible to work in both, environments with network coverage and environments outside network coverage.

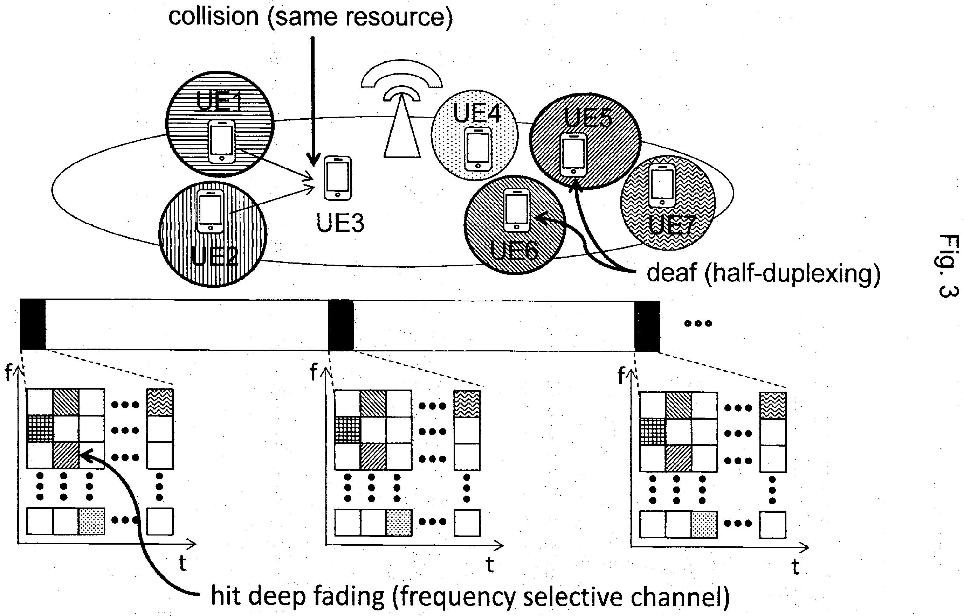

There are several research challenges in D2D discovery, some of which are illustrated in Figure 3. The first challenge concerns the occurrence of collisions: if two or more devices happen to select the same DRB, then a collision of multiple discovery signals will take place at the receiving devices. For example, in Figure 3, UE1 and UE2 select the same DRB, which leads to collisions at receiving device UE3. The second challenge concerns the deafness or the half-duplexing constraint. Half-duplexing means that the device cannot transmit and receive in the same time frame. For example, UE5 and UE6 respectively select DRBs at different frequencies which do however occur in the same time frame. Thus, UE5 and UE6 cannot receive the discovery signal from each other, since they also transmit their discovery signal in the same time frame. Third, the radio channel has frequency selective fading effects, which may lead to poor discovery performance due to the deep fading in some DRBs. Figure 3 shows an example of a DRB which is in deep fading. Finally, if all devices always persist to select the same DRB over multiple discovery resource pools, then the consistent collision and consistent deafness will occur which leads to an even worse situation. In this regard, some sort of DRB hopping scheme per device is necessary and essential to mitigate one or more of the problems described above. While hopping may not completely solve the described problems it may alleviate consistent collision deafness, and improve robustness against fading.

For the technology described in this application, it is assumed that time synchronization is perfect, since the focus of the technology described herewith is on the aspect of resource selection, not on time synchronization. However, the same technology can be extended to the case when devices are not mutually synchronized, by considering the observed time difference among transmissions of neighbor devices.

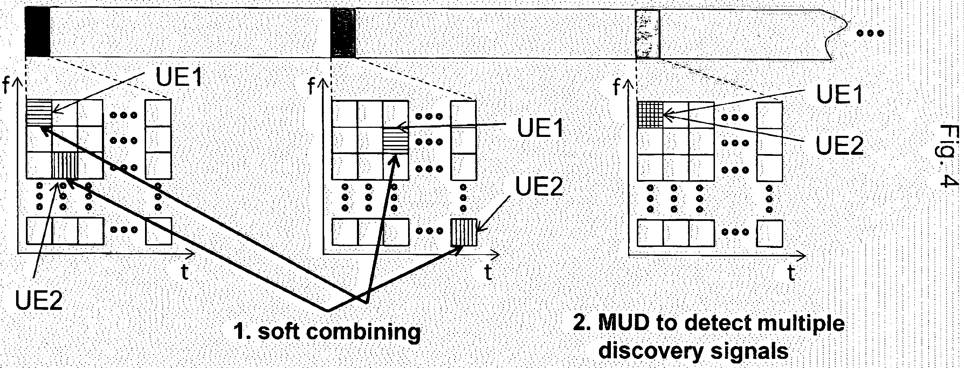

Besides the resource hopping scheme, there are two additional techniques to improve the D2D discovery performance, namely soft-combing and multiuser detection (MUD), which are illustrated in Figure 4.

Soft-combing is a technique that combines multiple discovery signals in the log-likelihood ratios (LLRs) domain; exploit received signals usefully instead of simply discarding them; can be understood analogous to chase combining for Hybrid Automatic Repeat reQuest (HARQ) adopted in the LTE Medium Access Control (MAC) layer or to Master Information Block (MIB) reception in LTE. The principle of soft-combining can be briefly described as follows: A receiver may receive multiple subsequent transmissions that cannot individually be decoded successfully due to low signal quality. Knowing that these transmissions contain identical data (or different parity information of the same data) from the same transmitter, it may happen that the receiver can still decode the transmitted data namely by combining these previously and erroneously received transmissions. The main benefit of soft-combining is to improve the probability of detecting the discovery signal, e.g., wherein improving the probability means that soft-combining enables the scheme to be more robust against collisions, interferences, and deep fading than a scheme without soft-combining. The challenge to apply soft-combining in D2D discovery is that a first UE may not know which resources are used by other second UEs when they transmit their discovery signals, i.e., the first UE would not be able to achieve constructive combining as done in HARQ.

Another technique to improve the D2D discovery performance is multiuser detection (MUD). The multiuser detection is a technique to enable devices to decode more than one discovery signal at a time. MUD is one of the receiver design technologies for detecting desired signal(s) from interference and noise. Traditionally, a single-user receiver design is known to suffer from the so-called near-far problem, where a nearby or strong signal source may block the signal reception of a faraway or weak signaled user. MUD can help the receiver to solve this problem. The main benefit of MUD is that it can improve the resource utilization and potentially resolve collisions. The challenge of applying MUD in D2D discovery is to make a receiver aware of and to distinguish different discovery signals for multiuser detection.

It is an object of the present technology to at least partly solve the above challenges and enable soft-combining and multiuser detection in the context of D2D discovery. One aspect of the present technology concerns a novel resource hopping scheme, as will become apparent later.

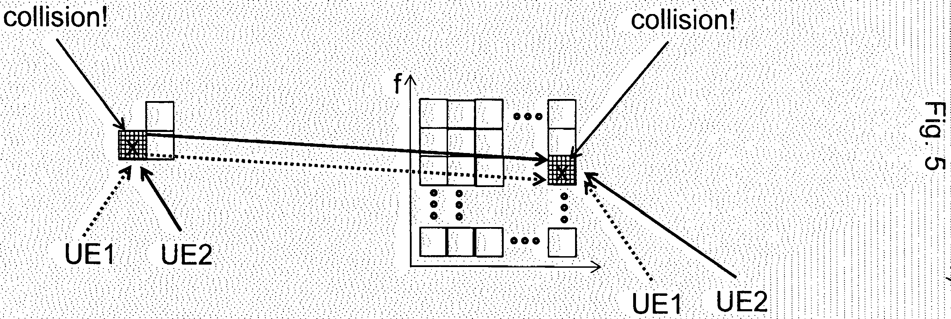

In 3GPP standard related to Proximity-based Services (ProSe), there are several state of the art (SoA) hopping techniques that have been proposed e.g., in the following written contributions to the standard: R1-135828 (Intel), R1-135224 (Samsung), R1-135372 (ZTE). Basically, two types of hopping schemes have been proposed: First, a random hopping scheme where each UE picks up one resource randomly in every resource pool without any resource hopping pattern definition; second, a definition of a single common hopping pattern for all UEs, where all UEs follow the same hopping rule. The main drawback of the second scheme is that it can lead to the consistent collision problem shown in Figure.5: At one discovery resource pool, two devices may happen to select the same DRB as in the left resource pool; then, the two devices will follow the same hopping rule, which leads to selecting the same DRB in the subsequent resource pools resulting in collision again. Thus, in this scenario, the collision will happen contiguously.

In conclusion, for conventional D2D discovery schemes, all receivers have generally no knowledge about the hopping pattern and initial state of the transmitters. Thus, these conventional schemes are not suitable for applying soft-combining and/or multiuser detection techniques, both of which would require the tracking of the selected DRB of each transmitting device.

GB-2375014-A discloses a neighbour discovery method according to the preamble of D1.

### SUMMARY OF THE INVENTION

The present invention is defined in the independent claims. The dependent claims define embodiments of the invention.

According to one embodiment, there is provided a method for transmitting a discovery signal by a communication device to enable its discovery by other communication devices, said method comprising the steps of: encoding a resource hopping pattern in said discovery signal, said hopping pattern defining a sequence of resources, and repeatedly transmitting said discovery signal such that for each of the repeated transmissions the resource, which is used for the transmission, is chosen in accordance with the sequence of resources defined by the resource hopping pattern.

The resource hopping pattern and a payload are encoded in the discovery signal and the encoding of the resource hopping signal and the payload are different such that the resource hopping pattern can be decoded separately.

This has the effect and advantage that different encodings permit, for example, different coding rates for the payload and the hopping pattern, such that, for example, the hopping pattern may be decoded more reliably than the payload. This would allow the receiver to first detect the resource hopping pattern of the transmitter, thereby allowing the receiver to apply soft-combining on subsequent discovery intervals to detect the payload.

In one embodiment of the method, said resource is an element allocated in a time, frequency, and/or power domain from a resource pool.

This has the effect and advantage that the method is applicable to environments, where discovery signals are transmitted in multicarrier communication systems.

In one embodiment, the method for transmitting further comprises determining a resource hopping pattern for a transmitting device, wherein determining a resource hopping pattern means selecting said resource hopping pattern from a predefined set of patterns

This has the effect and advantage that the hopping pattern may not be represented explicitly, i.e., by detailing the precise resource sequence of the pattern, in a transmission but that it can have a compact representation, such as a hopping pattern ID that identifies the pattern within the predefined set of patterns.

In one embodiment of the method for transmitting, the selecting of a resource hopping pattern from a predefined set of patterns is performed randomly.

This has the effect and advantage that randomness in the selection may cause neighbour devices to choose different patterns with a high probability and thus allows, with appropriate choice and design of the individual patterns in the predefined set, to reduce interference among transmitting neighbour devices. Moreover, an efficient and balanced use of the transmission resources can be achieved, when individual patterns in the predefined set are designed to instruct devices to equally use resources available in the resource pool.

In one embodiment of the method for transmitting, the resource hopping pattern is specified or selected such that the pattern specifies resources according to one or more of the following: specifying resources that are not used by any of the neighbour communication devices; specifying resources that are not frequently used by any of the neighbour communication devices; specifying resources that are least interfered by neighbouring communication devices that use the same resources; and/or specifying resource such that collisions with neighbour communication device's resource selections according to the neighbour communication device's resource hopping pattern in the next discovery intervals is minimized.

This has the effect and advantage that individual devices transmitting their discovery signal can select or specify the hopping pattern on their own, taking into account information about the resources used by neighbour devices and interference observed. Using one or more of the outlined strategies alone or in combination could achieve further that interference among transmitting neighbour devices may be reduced and that overall efficient and balanced use of all resources from the resource pool is facilitated.

In one embodiment of the method for transmitting, the communication device changes the resource hopping pattern periodically, randomly, or event-driven.

This has the effect and advantage that the use of resources from the resource pool can adapt over time to achieve efficient and balanced use of the available resources as devices enter or leave a certain neighbourhood where individual devices select resources from a common resource pool. Moreover, if the selection of resources or hopping pattern includes randomness, potential collisions could be alleviated after some period of time when the resource hopping pattern changes periodically, randomly, or event-driven.

According to one embodiment, there is further provided a method for receiving a discovery signal transmitted by a neighbour communication device according to the method of transmitting according to any of the previous embodiments comprising the step of decoding a resource hopping pattern of said neighbour communication device in said received discovery signal.

This has the effect and advantage that a receiving device can be aware of the resource hopping pattern of one or more transmitting neighbour devices thus and know the resources where said neighbour devices will transmit a discovery signal in the future. That in turn enables the application of techniques like soft-combining that the receiving device can employ to improve overall reception performance. Furthermore, the knowledge about the resource use of neighbour devices enable the receiving device to select resources in an informed manner to avoid potential collisions once it intends to transmit a discovery signal itself.

In one embodiment of the method for receiving, a try and error decoding of possible resource hopping patterns is performed using a brute force approach.

This has the effect and advantage that a receiver can determine the resource hopping pattern of a transmitter from among possible resource hopping patterns, e.g., from among patterns of a set of predefined patterns, even without explicitly receiving information about the hopping pattern from the transmitter. Thus the try and error decoding scheme enables all benefits that generally result from knowledge about the resource use of neighbour devices, wherein such benefits have been discussed previously.

In one embodiment, the method for receiving further comprises the step of receiving a signal wherein the receiving is based on soft-combining of the received discovery signal over multiple discovery intervals.

This has the effect and advantage that the receiving device may be able to decode data contained in the discovery signal of a transmitting neighbour device from multiple receptions by applying soft-combining to these multiple receptions, even if it may not be capable to successfully decode each received signal individually, due to low signal quality. This may overall lead to a more reliable reception of signals or improved energy efficiency.

In one embodiment, the method for receiving further comprises the steps of receiving a signal wherein the receiving is based on multiuser detection, wherein said multiuser detection comprises: decoding a first discovery signal transmitted by a first neighbour communication device from the received signal, cancelling said first discovery signal from the received signal, and decoding a second discovery signal transmitted by a second neighbour communication device from the received signal after the cancelling.

This has the effect and advantage in that the second discovery signal can be decoded from the received signal, even though the received signal is severely interfered by the first discovery signal. Thus, the use of multiuser detection facilitates the detection of the second discovery signal. This may overall lead to a more reliable reception of signals for which the transmission occurs concurrently, causing interference with another discovery signal. This may also lead to more efficient use of resources, since transmissions by different devices could take place concurrently using the same resources.

In one embodiment of the method for receiving, the device continues receiving discovery signals from a neighbour communication device after successfully decoding the discovery signal transmitted by said neighbour communication device.

This has the effect and advantage that the receiving device will be aware of future discovery signals transmitted by the neighbour communication device and thus be able to realize a change of the hopping pattern of the neighbour communication device which may occur periodically, randomly, or in response to an event. It also has the effect and advantage that the receiving device will be aware of the updates to the payload being transmitted by the neighbour communication device.

According to one embodiment, there is further provided an apparatus for transmitting a discovery signal by a communication device to enable its discovery by other communication devices, said apparatus comprising: A module for encoding a resource hopping pattern in said discovery signal, said hopping pattern defining a sequence of resources, and a module for repeatedly transmitting said discovery signal such for each of the repeated transmissions the resource which is used for the transmission, is chosen in accordance with the sequence of resources defined by the resource hopping pattern, respectively.

The resource hopping pattern and a payload are endoded in the discovery signal and the encoding of the resource hopping pattern and the payload are different such that the resource hopping pattern can be decoded separately.

The effects and advantages of the apparatus correspond to those of the method for transmitting a discovery signal by a communication device and have been described above.

The effects and advantages of the computer program correspond to those of the method for transmitting and/or receiving a discovery signal by a communication device and have been described above.

### DESCRIPTION OF THE DRAWINGS

Figure 1 shows a simple schematic device-to-device proximity discovery scenario.
Figure 2 shows a target system configuration of an embodiment of the present technology where the device-to-device discovery semi-statically reserves a pool of resources from the uplink spectrum band of cellular network.
Figure 3 illustrates several challenges that occur in device-to-device discovery.
Figure 4 illustrates the techniques of soft-combining and multi user detection.
Figure 5 illustrates an example scenario of consistent collision between two devices.
Figure 6 illustrates a scenario for network supported centralized hopping pattern allocation.
Figure 7 illustrates a scenario for distributed signaling of devices' hopping patterns.
Figure 8 illustrates the technique of smart resource selection to minimize collisions among the transmissions of different devices.
Figure 9 shows a scenario that illustrates the importance of decoding the hopping pattern in the discovery signal.
Figure 10 shows a flow chart that specifies the steps and sequence of the hopping pattern selection procedure.

### DETAILED DESCRIPTION

In an embodiment of the present technology, a device resource hopping technique is proposed that enables reducing problems with collisions by enabling a receiving device to be aware of other transmitting devices' hopping patterns. Optionally and additionally this enables the application of soft-combing and multiuser detection technique in D2D discovery. To enable the soft-combing and multiuser detection, enhanced requirements on a hopping technique compared to the techniques known from the state of the art are required: First, a receiving device should know the hopping pattern of one or more individual transmitting devices; second, the transmitting device should select different hopping patterns to avoid collisions, ideally with as much randomness as possible.

In the following, it is described how a receiving device may be aware of other transmitting devices' hopping patterns.

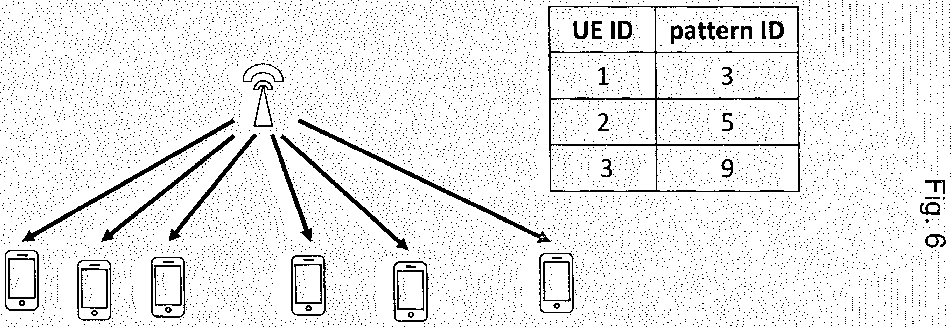

One simple method for assigning or for letting the device select a specific hopping pattern is via the support of the network but this scheme may be very costly in terms of network signaling. Such a scheme is shown in Figure.6, where the network defines the set of hopping patterns and their identification (IDs). The network then broadcasts the set of available hopping pattern and their IDs to all devices so that all devices share the same prior knowledge of hopping patterns. After that, the network allocates the hopping pattern ID to each of the devices and broadcast the entire allocation (which hopping pattern is allocated to which device) to all devices. The table in Figure 6 shows such allocation. As already mentioned, one possible drawback of this scheme is that it may require and generate a significant amount of signaling merely for allocating the resource hopping patterns.

An alternative and possibly better, i.e., more efficient, way to make a device aware of other transmitting devices' hopping patterns is to let UEs discover other devices' hopping patterns in a distributed way by embedding the hopping pattern of a device in the discovery signal it transmits. The embedding or encoding/including and steps related to the embedding/encoding of the hopping pattern are important aspects of the present technology and are described in detail in the following.

In a first step, each UE individually selects its hopping pattern randomly. Certain randomness among UEs can be introduced without network signaling overhead, but may involve a slight increase of overhead in the discovery signal.

In a second step, each transmitting UE encodes or includes/embeds its hopping pattern in the discovery signal, thereby enabling a receiving UE to obtain the hopping pattern of the transmitting UE. As a consequence, soft combining and multiuser detection can be applied at a receiving UE when receiving one or more discovery signals from one or more transmitting devices.

The term "encoding" thereby is to be interpreted in a broad sense, i.e., such as to encompass any way of embedding or including information into the discovery signal which enables identifying or specifying the hopping pattern.

Furthermore the term "discovery signal" also is to be interpreted in a broad sense such as to refer to any signal which is transmitted by a UE to enable other communication devices to discover the UE which has transmitted the discovery signal.

A discovery signal according to embodiments described herein thereby may comprise a part which encodes the hopping pattern, and furthermore it may - as an option or regularly - comprise a payload. In some embodiments the discovery signal may in addition to the encoding of the hopping pattern and the payload may also comprise one or more further components.

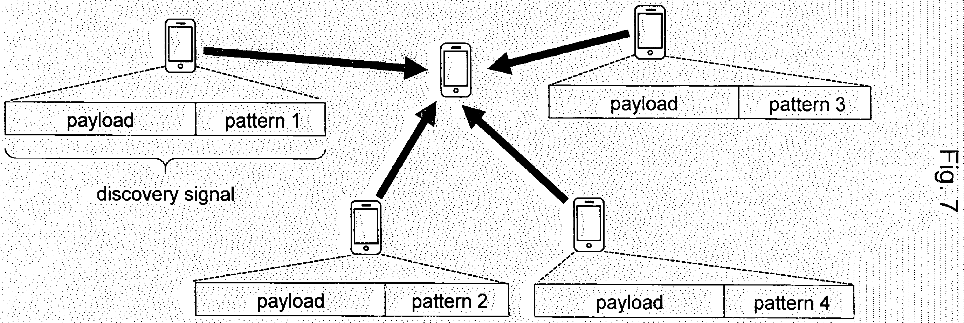

An illustration of this principal scheme can be found in Figure 7, where all the proximity devices have their hopping pattern 1 to 4 embedded in their discovery signal such that the receiver can decode the hopping pattern IDs and determine the future resource selection choices from other proximity devices.

The requirements for embedding the hopping pattern in a discovery signal according to one embodiment can be summarized as follows: The overhead which is incurred through the embedding in the discovery signal should be minimized. The same hopping pattern should be applicable over a certain period of time, .e.g., to facilitate discovery resource selection that will avoid collisions and enable soft-combining.

There are several possible realizations of the discovery signal: Each UE may embed modulo operation parameters and its initial state as a hopping pattern in the discovery signal; alternatively each UE may embed a hopping pattern ID, where e.g., the pattern IDs are prior known at all UEs; alternatively, each UE may embed a detailed hopping sequence e.g. (1, 1) → (2, 1) → (3, 4) → (7, 9), and additional information about periodicity, i.e. when the hopping sequence repeats.

In the following, advantages and beneficial technical effects of the present technology are described. By introducing the device-specific hopping pattern and providing the knowledge about hopping patterns of the discovery signal transmissions to the receiver device, there are many benefits of improving the discovery performance such as soft-combing, multiuser detection, smart resource selection, and easy-tracking of devices. The soft-combing and multiuser detection have been shown in Figure 4 and described previously.

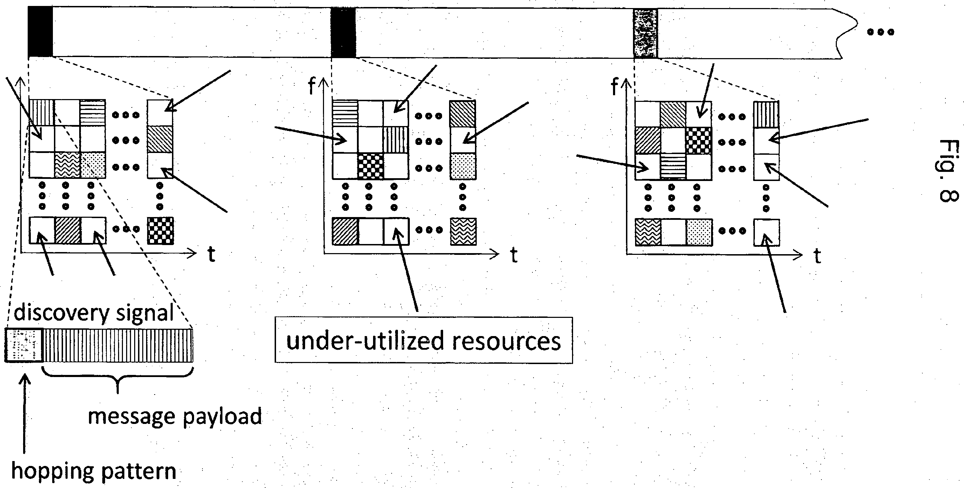

Smart resource selection based on the knowledge of device-specific hopping patterns can minimize the collisions, which is shown in Figure 8. By knowing the hopping patterns of other proximity devices, a device can predict the future resource selections by the proximity devices and thus make a smart selection of the under-utilized resources to minimize the collisions. For example, the device can select the hopping pattern which is least utilized by its proximity devices so as to minimize the potential interference at receiver devices. In particular, if there are empty hopping patterns available, the device can randomly select one out of the empty ones. If there are no empty patterns, the device can choose the hopping pattern which will minimize the collisions (which would occur when selecting the same resource as the neighbors/proximity devices) with neighboring device's resource selections in the next *K* discovery intervals.

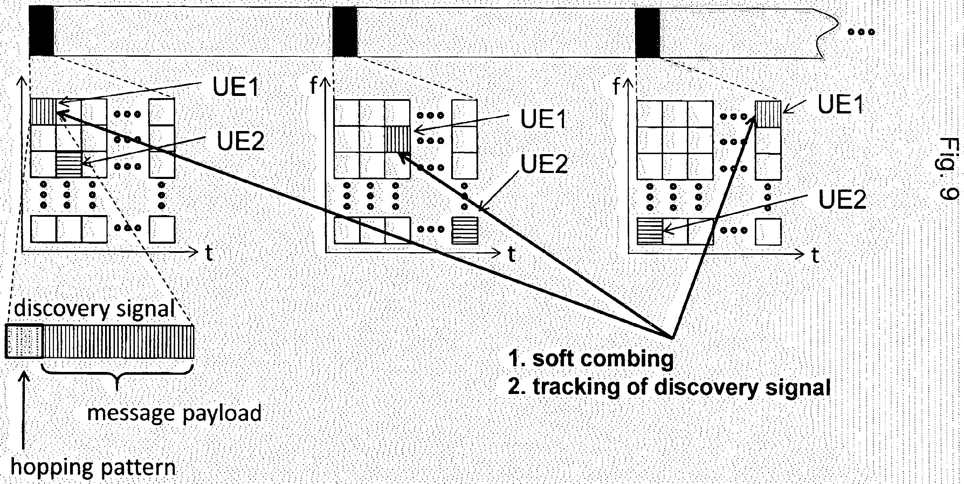

In the following, the importance of decoding the hopping pattern in the discovery signal is described, which is also illustrated in Figure 9.

For applying the soft-combing technique, it is crucial to decode first the hopping pattern part in the discovery signal as a precondition, and then the message payload part, so as to combine the right signals over multiple discovery intervals. In other words, the hopping pattern in one embodiment contains essential information which may, when applying soft-combining, be necessary to even enable the decoding of the message payload. Furthermore, most of the D2D applications require a "tracking" capability. By decoding and knowing the hopping patterns of other devices such "tracking" capability is facilitated.

One possible solution to address the problem of decoding the hopping pattern first and reliably is, for example, to apply different coding rates to the hopping pattern part and message payload part. For example, applying a lower rate coding for the hopping pattern part than that for the payload would enable a receiver to decode the hopping pattern more easily at a lower SINR. Alternatively, the receiving device may use a try and error scheme where all the possible predefined hopping patterns are tried and such that eventually the hopping pattern employed by each transmitter device is detected. This is a brute-force method, yet it can be an efficient method if the number of predefined patterns is small.

In the following, the steps and control flow of the method performed by a device for hopping pattern selection and change are described.

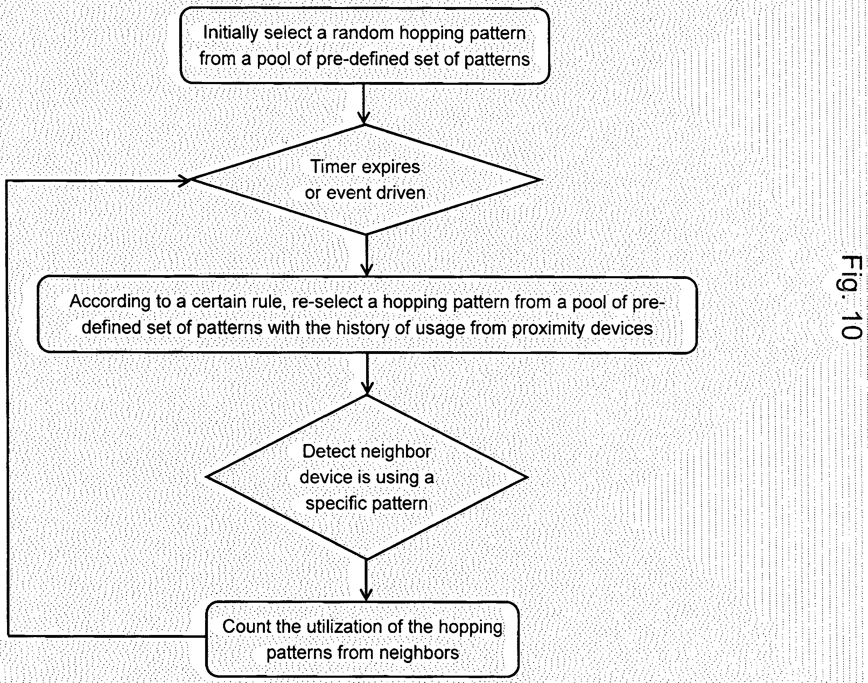

Figure 10 shows the device hopping pattern selection procedure:
Initially, when a device power up and join the D2D discovery service, it selects a random hopping pattern from a pool of pre-defined set of patterns. The pool of predefined hopping patterns is assumed to be known a priori to all devices, e.g., by broadcasting the hopping pattern information from the network to all devices periodically.

Secondly, the device only reselects the hopping pattern when a predefined timer expires or in response to an event signaled by the network (even-driven). When the device reselects its hopping pattern, it follows a certain rule and reselects the hopping pattern from a pool of a predefined set of patterns, considering the history of usage from proximity devices. A rule can for instance be to select the least utilized pattern, or to randomly select one of the X% least utilized patterns.

A pattern consisting of resources that are "not frequently used" can, for example, include those resources that are least frequently used by any of the neighbour communication devices or, for example, specified such that 50% of the resources in the pattern are least frequently used, and the other 50% of the resources in the pattern are chosen randomly.

After the device selects the hopping pattern to transmit its discovery signal, it also detects neighbor devices that are using specific patterns so as to update utilization of the hopping patterns from neighbors which provides background information for the hopping pattern re-selection.

The device repeats the hopping pattern selection process if the timer expires or certain event takes place.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise computing device or a mobile phone or any mobile device which is suitably programmed such that it is able to carry out a transmission of a discovery signal as described in the embodiments of the invention.

## Claims

1. A method for transmitting a discovery signal by a communication device to enable its discovery by other communication devices, said method comprising the steps of:
encoding a resource hopping pattern in said discovery signal, said hopping pattern defining a sequence of resources, and
repeatedly transmitting said discovery signal such that for each of the repeated transmissions the resource, which is used for the transmission, is chosen in accordance with the sequence of resources defined by the resource hopping pattern,
wherein the resource hopping pattern and a payload are encoded in the discovery signal, **characterized in that**
the encoding of the resource hopping pattern and the payload are different such that the resource hopping pattern can be decoded separately.

2. The method of claim 1,
wherein said resource is an element allocated in a time, frequency and / or power domain from a resource pool.

3. The method of one of the preceding claims, further comprising:
determining a resource hopping pattern, wherein determining a resource hopping pattern means selecting said resource hopping pattern from a predefined set of patterns.

4. The method of claim 3,
wherein the selecting is performed randomly.

5. The method according to any of the previous claims,
wherein the resource hopping pattern is specified or selected such that the pattern specifies resources according to one or more of the following:
specifying resources that are not used by any of the neighbour communication devices,
specifying resources that are not frequently used by any of the neighbour communication devices,
specifying resources that are least interfered by neighbouring communication devices that use the same resources, and/or
specifying resource such that collisions with neighbour communication device's resource selections according to the neighbour communication device's resource hopping pattern in the next discovery intervals is minimized.

6. The method according to one of the preceding claims, wherein the communication device changes the resource hopping pattern periodically, randomly, or event-driven.

7. A method for receiving a discovery signal transmitted by a neighbour communication device according to the method of one of claims 1 to 6, comprising the step of
decoding a resource hopping pattern of said neighbour communication device in said received discovery signal.

8. The method according to one of the preceding claims, wherein a try and error decoding of possible resource hopping patterns is performed using a brute force approach.

9. The method according to one of claims 7 or 8 further comprising the step of receiving a signal wherein the receiving is based on soft-combining of the received discovery signal over multiple discovery intervals.

10. The method according to one of claims 7 to 9 further comprising the steps of receiving a signal wherein the receiving is based on multiuser detection,
wherein said multiuser detection comprises:
decoding a first discovery signal transmitted by a first neighbour communication device from the received signal,
cancelling said first discovery signal from the received signal, and
decoding a second discovery signal transmitted by a second neighbour communication device from the received signal after the cancelling.

11. The method according to one of claims 7 to 10,
wherein the device continues receiving discovery signals from a neighbour communication device after successfully decoding the discovery signal transmitted by said neighbour communication device.

12. An apparatus for transmitting a discovery signal by a communication device to enable its discovery by other communication devices, said apparatus comprising:
A module for encoding a resource hopping pattern in said discovery signal, said hopping pattern defining a sequence of resources, and
a module for repeatedly transmitting said discovery signal such for each of the repeated transmissions the resource which is used for the transmission, is chosen in accordance with the sequence of resources defined by the resource hopping pattern, respectively,
wherein the resource hopping pattern and a payload are encoded in the discovery signal, **characterized in that**
the encoding of the resource hopping pattern and the payload are different such that the resource hopping pattern can be decoded separately.

13. An apparatus for receiving a discovery signal transmitted by a neighbour communication device according to the method of transmitting according to any of claims 1 to 6, comprising:
A module for decoding a resource hopping pattern of said neighbour communication device in said received discovery signal separately.

## Patentansprüche

1. Ein Verfahren zum Übertragen eines Entdeckungs-Signals durch eine Kommunikationsvorrichtung zum Ermöglichen ihrer Entdeckung durch andere Kommunikationsvorrichtungen, wobei das Verfahren die Schritte aufweist:
Kodieren eines Ressourcen-Hopping-Musters in dem Entdeckungssignal, wobei das Hopping-Muster eine Sequenz von Ressourcen definiert, und
wiederholtes Übertragen des Entdeckungs-Signals, so dass für jede der wiederholten Übertragungen die Ressource, die für die Übertragung verwendet wird, in Übereinstimmung mit der Sequenz von Ressourcen, die durch das Ressourcen-Hopping-Muster definiert wird, ausgewählt wird,
wobei das Ressourcen-Hopping-Muster und eine Nutzlast in dem Entdeckungssignal kodiert sind, **dadurch gekennzeichnet, dass**
das Kodieren des Ressourcen-Hopping-Musters und der Nutzlast unterschiedlich sind, so dass das Ressourcen-Hopping-Muster separat dekodiert werden kann.

2. Das Verfahren nach Anspruch 1,
wobei die Ressource ein Element ist, das in einer Zeit-, Frequenz- und/oder Leistungs-Domäne aus einem Ressourcenpool zugewiesen wird.

3. Das Verfahren nach einem der vorhergehenden Ansprüche, ferner aufweisend:
Ermitteln eines Ressourcen-Hopping-Musters, wobei das Ermitteln eines Ressourcen-Hopping-Musters bedeutet das Auswählen des Ressourcen-Hopping-Musters aus einem vordefinierten Satz von Mustern.

4. Das Verfahren nach Anspruch 3, wobei das Auswählen zufällig durchgeführt wird.

5. Das Verfahren nach einem der vorhergehenden Ansprüche, wobei das Ressourcen-Hopping-Muster spezifiziert oder ausgewählt wird derart, dass das Muster Ressourcen gemäß einem der folgenden spezifiziert:
Spezifizieren von Ressourcen, die nicht durch irgendeine der Nachbar-Kommunikationsvorrichtungen verwendet werden,
Spezifizieren von Ressourcen, die nicht häufig verwendet werden durch irgendeine der Nachbar-Kommunikationsvorrichtungen,
Spezifizieren von Ressourcen, die am geringsten interferieren mit Nachbar-Kommunikationsvorrichtungen, die dieselben Ressourcen verwenden, und/oder
Spezifizieren von Ressourcen derart, dass Kollisionen mit der Ressourcenwahl von Nachbar-Kommunikationsvorrichtungen gemäß dem Ressourcen-Hopping-Muster der Nachbar-Kommunikationsvorrichtung bei den nächsten Entdeckungsintervallen minimiert wird.

6. Das Verfahren nach einem der vorhergehenden Ansprüche, wobei die Kommunikationsvorrichtung das Ressourcen-Hopping-Muster periodisch ändert, zufällig ändert oder event-getriggert ändert.

7. Ein Verfahren zum Empfangen eines Entdeckungs-Signals, das durch eine Nachbar-Kommunikationsvorrichtung gemäß einem Verfahren nach einem der Ansprüche 1 bis 6 übertragen wird, aufweisend den Schritt des Dekodierens eines Ressourcen-Hopping-Musters der Nachbar-Kommunikationsvorrichtung in dem empfangenen Entdeckungs-Signal.

8. Das Verfahren nach einem der vorhergehenden Ansprüche, wobei ein try-and-error-Dekodieren von möglichen Ressourcen-Hopping-Mustern durchgeführt wird unter Verwendung eines brute-force-Ansatzes.

9. Das Verfahren nach einem der Ansprüche 7 oder 8, ferner aufweisend die Schritte des Empfangens eines Signals, wobei das Empfangen basiert auf soft-combining des empfangenen Entdeckungssignals über mehrere Entdeckungsintervalle.

10. Das Verfahren nach einem der Ansprüche 7 bis 9, ferner aufweisend die Schritte:
Empfangens eines Signals, wobei das Empfangen basiert auf Multiuser-Detektion, wobei die Multiuser-Detektion aufweist:
Dekodieren eines ersten Entdeckungs-Signals, das übertragen wird durch eine erste Nachbar-Kommunikationsvorrichtung, von dem empfangenen Signal,
Canceln des ersten Entdeckungs-Signals von dem empfangenen Signal, und
Dekodieren eines zweiten Entdeckungs-Signals, das durch eine zweite Nachbar-Kommunikationsvorrichtung übertragen wird, von dem empfangenen Signal nach dem Canceln.

11. Das Verfahren nach einem der Ansprüche 7 bis 10,
wobei die Vorrichtung fortfährt Entdeckungs-Signale von einer Nachbar-Kommunikationsvorrichtung zu empfangen nach dem erfolgreichen Dekodieren des Entdeckungs-Signals, das durch die Nachbar-Kommunikationsvorrichtung übertragen wurde.

12. Eine Vorrichtung zum Übertragen eines Entdeckungs-Signals durch eine Kommunikationsvorrichtung, um ihre Entdeckung durch andere Kommunikationsvorrichtungen zu ermöglichen, wobei die Vorrichtung aufweist:
ein Modul zum Kodieren eines Ressourcen-Hopping-Musters in dem Entdeckungssignal, wobei das Hopping-Muster eine Sequenz von Ressourcen definiert, und
ein Modul zum wiederholten Übertragen des Entdeckungs-Signals, so dass für jede der wiederholten Übertragungen die Ressource, die für die Übertragung verwendet wird, in Übereinstimmung mit der Sequenz von Ressourcen, die durch das Ressourcen-Hopping-Muster definiert wird, ausgewählt wird,
wobei das Ressourcen-Hopping-Muster und eine Nutzlast in dem Entdeckungssignal kodiert sind, **dadurch gekennzeichnet, dass**
das Kodieren des Ressourcen-Hopping-Musters und der Nutzlast unterschiedlich sind, so dass das Ressourcen-Hopping-Muster separat dekodiert werden kann.

13. Eine Vorrichtung zum Empfangen eines Entdeckungs-Signals, das durch eine Nachbar-Kommunikationsvorrichtung gemäß einem Verfahren des Übertragens nach einem der Ansprüche 1 bis 6 übertragen wurde, aufweisend:
ein Modul zum separaten Dekodieren eines Ressourcen-Hopping-Musters der Nachbar-Kommunikationsvorrichtung in dem empfangenen Entdeckungs-Signal.

## Revendications

1. Procédé pour transmettre un signal de découverte par un dispositif de communication afin de permettre sa découverte par d'autres dispositifs de communication, ledit procédé comprenant les étapes consistant à :
encoder un motif de saut de ressources dans ledit signal de découverte, ledit motif de saut définissant une séquence de ressources, et
transmettre de façon répétée ledit signal de découverte de sorte que pour chacune des transmissions répétées la ressource, qui est utilisée pour la transmission, soit choisie conformément à la séquence de ressources définie par le motif de saut de ressources,
dans lequel le motif de saut de ressources et une charge utile sont encodés dans le signal de découverte, **caractérisé en ce que**
l'encodage du motif de saut de ressources et de la charge utile est différent de sorte que le motif de saut de ressources puisse être décodé séparément.

2. Procédé selon la revendication 1,
dans lequel ladite ressource est un élément alloué dans un domaine de temps, de fréquence et/ou de puissance à partir d'un pool de ressources.

3. Procédé selon l'une des revendications précédentes, comprenant en outre :
la détermination d'un motif de saut de ressources, où la détermination d'un motif de saut de ressources signifie la sélection dudit motif de saut de ressources parmi un ensemble prédéfini de motifs.

4. Procédé selon la revendication 3,
dans lequel la sélection est effectuée de façon aléatoire.

5. Procédé selon l'une quelconque des revendications précédentes,
dans lequel le motif de saut de ressources est spécifié ou sélectionné de sorte que le motif spécifie des ressources selon une ou plusieurs de ce qui suit :
la spécification de ressources qui ne sont utilisées par aucun des dispositifs de communication voisins,
la spécification de ressources qui ne sont utilisées fréquemment par aucun des dispositifs de communication voisins,
la spécification de ressources qui font l'objet de moins d'interférence par des dispositifs de communication voisins qui utilisent les mêmes ressources, et/ou
la spécification de ressources de sorte que des collisions avec des sélections de ressources du dispositif de communication voisin selon le motif de saut de ressources du dispositif de communication voisin dans les intervalles de découverte suivants soient minimisées.

6. Procédé selon l'une des revendications précédentes, dans lequel le dispositif de communication change le motif de saut de ressources périodiquement, aléatoirement, ou déclenché par un événement.

7. Procédé pour recevoir un signal de découverte transmis par un dispositif de communication voisin selon le procédé selon l'une des revendications 1 à 6, comprenant l'étape consistant à
décoder un motif de saut de ressources dudit dispositif de communication voisin dans ledit signal de découverte reçu.

8. Procédé selon l'une des revendications précédentes, dans lequel un décodage par essai et erreur de motifs de saut de ressources possibles est effectué en utilisant une approche force brute.

9. Procédé selon l'une des revendications 7 ou 8, comprenant en outre l'étape consistant à
recevoir un signal où la réception est basée sur la combinaison souple du signal de découverte reçu sur de multiples intervalles de découverte.

10. Procédé selon l'une des revendications 7 à 9, comprenant en outre les étapes consistant à
recevoir un signal où la réception est basée sur la détection multiutilisateur, où ladite détection multiutilisateur comprend :
le décodage d'un premier signal de découverte transmis par un premier dispositif de communication voisin à partir du signal reçu,
l'annulation dudit premier signal de découverte à partir du signal reçu, et
le décodage d'un second signal de découverte transmis par un second dispositif de communication voisin à partir du signal reçu après l'annulation.

11. Procédé selon l'une des revendications 7 à 10, dans lequel le dispositif continue à recevoir des signaux de découverte en provenance d'un dispositif de communication voisin après le décodage réussi du signal de découverte transmis par ledit dispositif de communication voisin.

12. Appareil pour transmettre un signal de découverte par un dispositif de communication afin de permettre sa découverte par d'autres dispositifs de communication, ledit appareil comprenant :
un module pour encoder un motif de saut de ressources dans ledit signal de découverte, ledit motif de saut définissant une séquence de ressources, et
un module pour transmettre de façon répétée ledit signal de découverte de sorte que pour chacune des transmissions répétées la ressource, qui est utilisée pour la transmission, soit choisie conformément à la séquence de ressources définie par le motif de saut de ressources, respectivement,
dans lequel le motif de saut de ressources et une charge utile sont encodés dans le signal de découverte, **caractérisé en ce que**
l'encodage du motif de saut de ressources et de la charge utile est différent de sorte que le motif de saut de ressources puisse être décodé séparément.

13. Appareil pour recevoir un signal de découverte transmis par un dispositif de communication voisin selon le procédé de transmission selon l'une quelconque des revendications 1 à 6, comprenant .
un module pour décoder un motif de saut de ressources dudit dispositif de communication voisin dans ledit signal de découverte reçu séparément.
